(19) Europäisches Patentamt

European Patent Office

Office européen des brevets

(11) **EP 1 791 151 A1**

(12) **EUROPEAN PATENT APPLICATION**

(43) Date of publication:
30.05.2007 Bulletin 2007/22

(51) Int Cl.:
$H01J\ 7/18$ (2006.01)　　$B01J\ 20/02$ (2006.01)
$B01J\ 20/04$ (2006.01)　　$C22C\ 24/00$ (2006.01)

(21) Application number: 05025992.8

(22) Date of filing: 29.11.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(71) Applicant: Nanoshell Materials Research &
Development GmbH
9020 Klagenfurt (AT)

(72) Inventors:
• **Chuntonov, Konstantin**
  **9020 Klagenfurt (AT)**
• **Voronin, Gennady F., Prof.**
  **119922 Moscow (RU)**
• **Malyshev, Oleg B., Dr.**
  **Cheshire WA4 4AD (GB)**

(74) Representative: **Becker Kurig Straus**
**Patentanwälte**
**Bavariastrasse 7**
**80336 München (DE)**

(54) **Metallic gas sorbents on the basis of lithium alloys**

(57)　The present invention relates to metallic gas sorbents on the basis of lithium alloys in the form of balls, wires and strips made of A - Me alloys as solid solutions, in which A is Li containing Na in the range of 0 to 5 at % and Me is a non-active and non-volatile component or a combination of metals selected from the group of Ag, Al, Au, Co, Cu.

EP 1 791 151 A1

Printed by Jouve, 75001 PARIS (FR)

## Description

### I. Field of Invention

The present invention relates to the field of metallic gas sorbents, more specifically, to lithium alloys for sorption of residual gases in vacuum vessels.

### II. Background of the Invention

Chemical bonding of residual gases by sputtered metals in vacuum vessels at room temperature is presently achieved in one of the three following ways:

1. with thin films of transition metals consisting of several atomic layers, continuously or periodically renewed *with deposition* rates equivalent to the gas sorption rates;
2. with porous films of alkaline earth metals, several thousands of atomic layers thick, produced by *flash methods;*
3. with comparatively massive films of transition metals produced by *cathode sputtering* with the formation of columnar structures.

The above listed methods differ in the getter material, its production technology, and, as a result, in the sorption characteristics, which, in their turn, define the field of application for the getters.

From the point of view of these differences the main borderline can be drawn between the first two ways and the third one.

The first two methods have one feature in common, namely, the high efficacy of using the getter material in the sense that here the entire volume of the getter coating becomes involved in the sorption process. This fact provides the given two methods with a significant advantage over the third method, where the sorption at room temperature can proceed only until the surface, available to gases, is saturated with the gases without their penetration inside the column crystals [about the column or structure of the deposit see V. Palmieri, et al. US Pat. 5 306 406 (1994); A. Conte, et al. US Pat. Appl. 20040253476 (2004)]. To restore the pumping function of the coatings in this last case, it is necessary to stimulate the adatom diffusion by heating the material to the activation temperature, which is sometimes impossible and always undesirable. But even taking into consideration all the regeneration cycles, the total sorption capacity, reached by the end of the lifetime of the material is by orders of magnitude lower, than for the getters of the first or the second method.

The first of the effective methods is used when, according to the operation conditions, of vacuum chambers the devices are periodically exposed to the outside atmosphere.

Titanium sublimation pumps, in which a thin titanium film, condensing on a pump panel under intense heating of a Ti - containing wire [T. M. Weston. VDN/02/96.DOC, 1996. CLRC Daresbury Lab.]serves as gas sorbent, can be taken as an example. The disadvantages of this method are: the high temperature required for the titanium evaporation and the low values of the sticking coefficient for some residual gases due to the moderate chemical reactivity of titanium.

The second method was specially developed for sealed-off vacuum devices, which needed getters with large sorption capacity in order to increase their lifetime. Therefore, chemically very active alkaline earth metals are used in these devices [J. C. Tumbull, J. Vac. Sci. Technol., Vol. 14, No. 1 (1977), pp. 636 - 639; W. A. van Gils. US Pat. 4 007 899 (1978); C. Caretti, et al. US Pat. 6 851 997 (2005)], these metals are deposited in the form of porous films with an average thickness of about a micron. These films are not subject to self passivation and show very high room temperature sorption capacity nearing to the theoretical value.

In modem flash getters active metals are released to the vapor phase as a product of an exothermal reaction, which takes place in a powder mixture

$$ AM_n + mB \xrightarrow{\quad T \quad} M_n B_m + A \uparrow \quad , $$

where A represents Ca, Sr or Ba, M usually Al, and B a reducing agent, e.g., Ni; T is the reaction temperature, n and m are indices [B. Ferrario, Vacuum 47, No.4 (1996), pp.363 - 370].

Disadvantages of getters of the third type are:

- single usage;
- uncontrolled character of evaporation process;
- non-uniformity of the thickness of the films deposited
- inadmissibility of a contact between the film and the atmosphere;
- formation of loose particles by the end of the lifetime of the film;
- a need for gas injection during flashing.

An ideal solution for the problem of gettering of evacuated volumes could be an evaporable getter working in a regime similar to the regime of a titanium sublimation pump, but depositing *(1) thin and uniform layer* of *(2) a more reactive metal,* e.g., alkali or alkaline earth metals. If a new monolayer can be deposited on every monoatomic layer of reactive metal as soon as this one has been consumed (saturated by sorbed gas), the result will be an overgrowth by products of the reaction between the getter metal and residual gases with formation of a monolithic coating which is firmly bonded to the substrate. The experience of using different film materials in vacuum electronics, e.g., in photocathodes, has shown that this kind of coating with a layer thickness of up to ~1000 Å does not lead to the formation of loose particles. In cases when the vacuum chamber vented to air, the entire loss of active metal does not exceed one monoatomic layer.

Presently known vapor generators of chemically active metals with controllable deposition rates do not allow obtaining thin films of uniform thickness on the surfaces of any size and shape as required in many applications, the extreme cases of which are closed cavities in MEMS, on one hand, and huge evacuated chambers in particle accelerators, on the other.

For example, a barium evaporator, consisting of a short iron capillary tube with barium metal inside [W. Espe et al. Getter materials, Electronics, 1950, Oct.; M. Pirani et. al. Principles of vacuum engineering, Reinhold Publishing Co., N.Y., 1961, Ch. 6, pp. 251 - 291], can emit on heating a divergent beam of barium atoms, which escape through a thinned linear part of the tube, formed by cutting part of the wall along the generatrix. Evaporation flow in this case has pronounced space directivity, so that manufacturing of uniform getter coatings with evaporators of this type is not possible.

Neither evaporators of another type, the so called Alkali Metal Dispensers (AMD), nor the AlkaMax type devices [L. Cataneo et al. AlkaMax Application Note Vol. 1, May 2004, SAES Getters S.p.A.], can create uniform film coatings on any surface desired, due to design limitations, which are inherent because they are connected with the very nature of the evaporation process in both cases. In fact, alkali metal vapors appear in these generators as a result of redox reactions, which take place in powder mixture of alkali chromates with a metallic reducing agent. This reaction starts on heating of the mixtures to a threshold temperature (~ 500° C and higher), at which the vapor pressure of the released pure metal is unacceptably high. To slow the deposition rate down to acceptable values, evaporators of the AMD or AlkaMax type are usually made in the form of a Knudsen cell with a very small outlet aperture usually in a form of a narrow slit or a system with point perforations. Evaporation flow in such generators is governed by the cosine law, such that a non-uniformity of the resulting coatings is inevitable.

Thus, the problem associated with chemical pumping of residual gases in different vacuum vessels requires the development of such vapor generator of chemically active metals, which is capable of depositing thin and uniform films starting from monoatomic layers on surfaces previously defined. The presence of a chemically active component in a vapor source allowed eliminating the traditional distinction between evaporable and non-evaporable gas sorbents using one and the same material as an evaporable or a non-evaporable gas sorbent by changing its outside conditions.

### III. Summary of the Invention.

The present invention refers to a new vapor generator of the Langmuir type, which allows depositing thin lithium films onto substrates of arbitrary shape following any given time law by heating in vacuum an alloy, belonging to the solid solution field of lithium in Ag, Al, Au, Co, or Cu, and having on its surface a protective layer of one of these five matrix metals. Depending on the taget this generator can be manufactured in the form of a ball, a wire or a strip and can be heated by any suitable means based on an indirect or direct method.

The solution for pertinent technological problems presented in this patent is based on the ability of lithium to form solid solutions in a wide concentration range with a large number of non-volatile and chemically non-active metals, which considerably raise the temperature boundary of solid states for lithium. Owing to this advantage, the design of vapor generation devices is simplified since the increased mechanical rigidity of the alloy eliminates the necessity of any container or other carrier for supporting the vapor source.

The ductility of solid solutions allows the shaping of lithium alloys into any required form, including the forms of balls, wires, and strips. By placing a ball-like vapor source in the center of a spherical chamber, by suspending a wire source along the axis of a cylindrical chamber, or by installing strip sources parallel to the wall planes of a chamber with flat walls, it is possible to create the conditions necessary for the deposition of uniform coatings.

In the preferred embodiment the described lithium generators consist of balls, wires and strips made from lithium alloys with Ag, Al, Au, Co, or Cu in the concentration range of $0 < C_{Li} \lesssim 50$ at %, $0 < c_{Li} \lesssim 2$ at %, $0 < c_{Li} \lesssim 40$ at %, $0 < c_{Li} \lesssim 28$ at %, and $0 < c_{Li} \lesssim 22$ at % respectively. Vapor generators of this type, under the condition, that the temperature is uniform on the entire source surface and the source shape is adjusted to the symmetry of the evaporation flow to the substrate shape, provide uniform film coatings, the thickness of which can be controlled by the deposition temperature and time. Not only binary lithium alloys can be used as a material basis for new vapor generators, but also ternary and generally multicomponent lithium alloys, where either mixtures of the above mentioned metals or the same Ag, Al, Au, Co and Cu with additions of the other metals are used as a lithium's partner, with the only limitation that lithium is a dissolved component in the material.

But the described lithium alloys show sorption activity by themselves. And their activity is approximately proportional to lithium concentration in an alloy, and it also grows fast with temperature. That is why lithium alloys of the above mentioned composition can be used not only as vapor sources but also as non-evaporable getters.

The production of lithium gas sorbents is rather simple and comprises only three steps: (1) obtaining of an initial homogenous ingot, (2) shaping of the material, and (3) creation of a protective coating on the surface of the source.

Preparation of a Li-containing alloy in the form of a high purity ingot is a routine procedure for a laboratory specializing in the field of precision vacuum metallurgy and can be carried out according to several established methods. After the ingot is ready, a wire or a strip is produced from it, using a rolling mill machine and alternative operations of mechanical treatment of the material with intermediate work hardening in vacuum.

The final stage, obtaining a protective overlayer on the surface of the chemically active material, comes down, in principle, to a short heating of this material in vacuum, which leads to an almost complete exhaustion of its surface layer of the volatile component and to the formation of a continuous layer consisting of the atoms of the non-volatile component on its surface. This method of creating a non-volatile component overlayer on the surface of a material, containing at least one volatile component and at least one nonvolatile component, was announced under the name of a "dry method" in [K. A. Chuntonov et al.,Vacuum, Vol. 47, No. 5 (1996), pp. 463 - 466] and is described in the present patent. The physical aspects of the process are discussed below in Section V.

The main advantages of new gas sorbents according to the present invention are as follows:

> 1. Gas sorbents of the present invention do not require preliminary outgassing and after installation at the working place are immediately ready for usage because they are subjected to the necessary thermovacuum treatment during manufacturing.
> 2. Vapor generators of the present invention allow long exposure to dry air, nitrogen or other dry gases.
> 3. Vapor generators of the present invention allow, due to the symmetry of the evaporation flow created by the free surface, producing uniform films on substrates of any form.
> 4. Vapor generators of the present invention provide fine control of the deposition process in the widest range of rates and at lower temperatures than other types of evaporators.
> 5. Vapor generators of the present invention allow realization (item 2 and 3) of an optimal working regime, in that the ratio between rates of deposition and gas sorption can be adjusted close to one, a tight layer of the products of the reactions between an active metal and gases being formed. In this growth, no loose particles grow on a substrate.
> 6. Gas sorbents of the present invention possess a very broad spectrum of action, sorbing practically all gases except noble ones.
> 7. Vapor generators of the present invention are characterized by a very simple production technology, consisting of only three elementary operations, which promises an inexpensive price of the end product.

It should be particularly mentioned that lithium films as well as the films of the products of its reactions with gases in corrosion aspect are absolutely safe for all metallic constructions, which are usually used in vacuum technologies. If necessary, these films are easily removed with clean water, without any residual left, and after drying any metallic panel can work further without any subsequent effect.

## IV. Short Description of the drawings

Fig. 1. Comparison of sorption behavior of lithium and barium films.
Fig. 2. Types of vapor generators.
Fig. 3. Phase diagram of the material and the temperature boundaries of its working regimes.
Fig. 4. Evaporation flow j as a function of time $\tau$.
Fig. 5. Evolution of the radial distribution of concentration $c_{Li}$ of the heated in vacuum wire of radius R.

## V. Detailed Description of the Invention

In the present invention three connected but separate parts, each of which contains its own element of novelty, can be singled out: a new gas sorbent (A), a technology of its production (B), a novel organization of the sorption process (C).

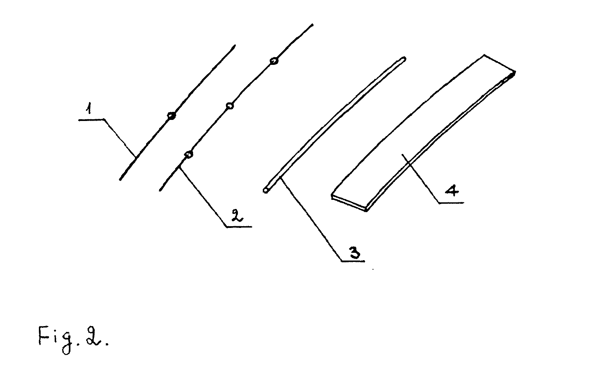

A. The new gas sorbent represents by itself a whole family of lithium-containing materials in the form of balls (single bead or garland-type), wires and strips (Fig.2). These balls, wires and strips are produced from highly ductile alloys of Ag-Li with a Li concentration of not more than 50 %, Al-Li alloys with a Li concentration of not more than 2 %, Au-Li alloys with a Li concentration of not more than 40 %, Co-Li alloys with a Li concentration of not more than 28 %, and Cu-Li alloys with a Li concentration of not more than 22 %. These wires or strips can be placed inside a vacuum chamber without additional support, only due to their own rigidity. In this case the upper limit for heating of the material should not exceed $T_{max} = T_S$ - 100°C, where $T_S$ is the solidus temperature of the source material. Meanwhile, if a refractory metal carrier is used, on which the lithium source is coiled or fixed in a form of a ball, than $T_{max} = T_S$ in this case. Besides binary solid solutions, ternary solid solutions can be used, e.g. solid solutions of the systems Ag - Cu - Li, Al- Cu - Li, etc. and to strengthen sorption effect of lithium a small amount of sodium in the range of 2-5 % can be added.

The described product can be used not only as a vapor source for obtaining film gas sorbents (A.1), but also as non-evaporable getters (A.2).

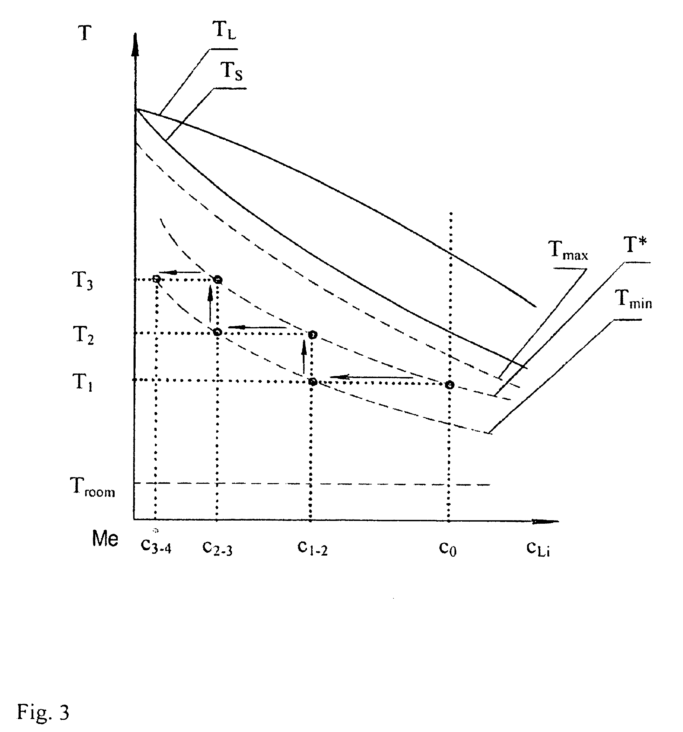

**A.1.** Ball, wire, and strip lithium evaporators can produce films of uniform thickness by adjusting the symmetry of the evaporation flow to the shape of the substrate, created by the open surface of the source. At the same time, for the production of monoatomic renewable films it is desirable to maintain deposition rates in the range of $10^{-1} \div 10^{-3}$ Å/s, which is most convenient for process control. The temperature, at which the deposition rate reaches $10^{-3}$ Å/s, as a lower boundary $T_{min}$, together with $T_{max}$ defines the range of working temperatures (Fig. 3), where the new product can be used as a vapor source for obtaining film gas sorbents.

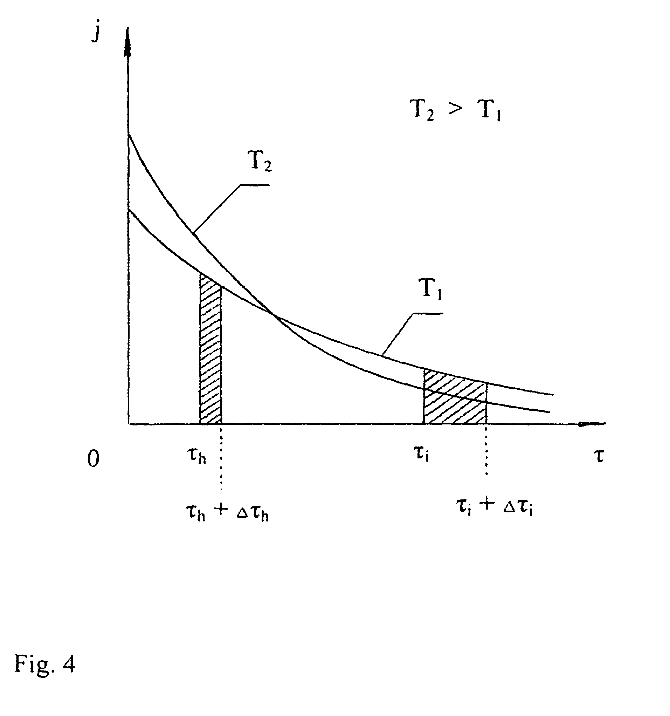

Each generator is characterized by a set of curves $j = j(\tau)$ for temperatures in the interval ($T_{max} - T_{min}$). These curves are characterized by exponential descent of the deposition rate with time and the descent is the steeper the higher the evaporation temperature (Fig. 4). Due to monotonic decrease of the value of $j = j(\tau)$ with time, deposition time $\Delta\tau$, during which a monoatomic layer is formed, requires a gradual increase.

**A.2.** Lithium atoms in ionic compounds, in particular, lithium nitrides and oxides, as well as in other products of its reactions with residual gases, possess high mobility. Lithium diffusion coefficients in metallic substances thus exceed by many times the average values of metal diffusants. Therefore lithium alloys, especially in a form of strips, prepared from solid solutions of lithium in Ag, Cu, Co, etc. can also play a role of non-evaporable getters. For this purpose, firstly, the strips have to be placed in suitable positions inside of a vacuum chamber, parallel to each other with a small gap between them, such that their array has a maximum permeability for gas molecules. Secondly, to accelerate lithium diffusion from inside the strips through the layer of the reaction products to the surface and, equally, to accelerate the counter flow of gas molecules through the products of reaction, it is necessary to maintain these strips heated to the temperatures lower than the boundary $T_{min}$ (Fig. 3), and preferably at 150 - 250°C. Thus, one and the same material depending on the heating temperature can be used either as an evaporable or as a non-evaporable getter. In the latter case it is acceptable to use alloys, lithium concentration in which goes beyond the limits of homogeneity region of solid solutions.

**B.** Production of new vapor generators or related products, e.g. non-evaporable gas sorbents of the strip type, starts with the preparation of a lithium alloy in the form of ingots of the compositions Ag < c ≤ Ag - 50 % Li, Al < c ≤ Al - 2 % Li, Au < c ≤ Au - 40 % Li, Co < c < Co - 28 % Li, Cu < c < Cu - 22 % Li, or ingots of multicomponent alloys. So, Ag, Al, Au, Co and Cu can be included in the vapor source material mixed with each other or with some other non-volatile and non-active metal. Also small amounts of sodium can be added to lithium in the manufacturing of gas sorbents.

Then ingots are formed into wires or strips by mechanical treatment, whereas separate are melted on a resistive core into a form of balls or are drafted around it mechanically. The final technological stage is the creation of a protective coating by the second, non-active component on the surface of chemically active material by heating the object in vacuum.

The technology of producing the above mentioned substances in the form of cylindrical ingots is well developed and widely known [see e.g. A. Brown et. al. Formation techniques, in: Intermetallic compounds, Ed. J. H. Westbrook, John Wiley, N.Y., 1967, pp. 303 - 336; Crystal growth. Theory and techniques, Vol. 1, Ed. C. H .L. Goodman, Plenum Press, N.Y., 1974; K. A. Chuntonov et. al. J. Less - Comm. Met., Vol. 83 (1982), pp. 143 - 153; P. L. Martin et. al. Synthesis and processing techniques, in: Intermetallic compounds. Principles and practice, Vol. 1, Ed. J. H. Westbrook, John Wiley, N.Y., 1994, pp.637 - 657 etc.]. In practice, the open crucibles were used and the components were melted in extremely pure argon atmosphere at a pressure lower than the atmospheric, usually at 1÷50 mbar. It is also worth mentioning that there is the necessity of thorough mixing of Li-containing melts because of the great difference in the densities of lithium and its partners in the alloy.

Very much in the same way, melting of balls on a resistive wire is a routine procedure which has been used e.g. in photocathode production for decades. Likewise, production of strips and wires with the help of rolling or drawing equipment is not difficult. For example, a bench rolling mill (Mario Di Maio) can be used for this purpose.

The technology of production of vapor generators of lithium according to the present patent includes the novel method, with the help of which isolation of chemically active material from the ambient medium is achieved, i.e. the method of creation of a protective cover layer on the surface of wires, strips and balls. The procedure itself comprises heating of the source material for a short time in vacuum to a certain preset temperature, a short exposure to this temperature, followed by cooling. The direct heating is preferable, because thermal inertia of the heated mass in this case is minimal, and, consequently, the heating and cooling processes are most controllable.

In the operational respect this finalizing thermovacuum treatment is technologically simple, but as the processes of formation of cover layers on the surface of solids containing a volatile component have been only poorly studied, we describe their mechanism here in short.

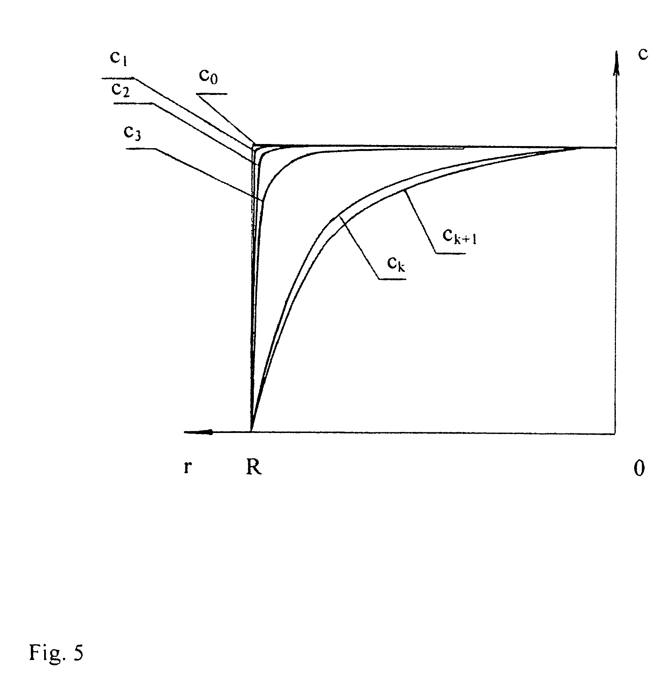

Consider a wire with a radius R and composition $c_0$ made of solid solutions of Li in a certain metal Me (Fig. 3) placed in a high vacuum chamber and heated very rapidly with an electric current to a temperature $T_{min} < T < T_{max}$, at which the Li vapor pressure is high enough for evaporation. Li atoms will escape from the surface immediately and the surface concentration of Li will decrease almost to zero. Diffusion of lithium atoms from the volume of the wire to the surface starts, which leads to the well known evolutionary picture (Fig. 5), according to which the surface layer consisting of a non-volatile metal Me gradually grows with time and expands inwards.

For metallic systems the ratio of relaxation time for the temperature fields $t_T \sim R^2/a$, where $a$ is a temperature diffusion coefficient, to relaxation time of concentration fields $t_D \sim R^2/D$, where D is a diffusion coefficient, is small, in the order of magnitude of $t_T/t_D \simeq D/a \sim 10^{-4}$. This means, that if at some moment the filament current is switched off, then during the cooling of the heated wire to room temperature the radial distribution of the lithium concentration does not change noticeably, and this allows quenching of any of the states defined by the diffusion process. As a result, quenching the material at early stages of thermovacuum treatment, we obtain a new method of producing protective coatings.

Thus, heating of the treated material in vacuum, its exposure in a heated state for a preset time and subsequent rapid cooling lead to the formation of a certain near-surface layer, which consists of atoms of the second, non-volatile component, and which at room temperature, when all diffusion processes are frozen, plays the role of a protective coating.

The orders of magnitude of the values characterizing the described processes can be appreciated from the following data: for a 1-mm diameter wire of the composition Ag-20 % Li a cover layer of an arbitrary thickness of 2 $\mu$m is created in a vacuum chamber at $10^{-8}$ mbar by filament heating to 390°C and exposure at this temperature for 0.5 min, or by heating to 500°C with immediate switching off of the filament after this. So, a new material on the basis of solid solutions of lithium in chemically non-active and non-volatile metals has been created.

This material is able to work as a non-evaporable getter in the temperature range of $T_{room} < T < T_{min}$, and mainly at 150 - 250°C, when diffusion processes are activated increasing approximately by 100 times in case of lithium alloys. At stronger heating to temperatures $T_{min} < T < T_{max}$ the material starts working as a vapor generator.

**C.** An organization of the sorption process is described for two regimes: regime of evaporable getter (C.1) and regime of non-evaporable getter (C.2).

**C.1.** Regime of evaporable getter

The described sorption process is based on a modified model of a titanium sublimation pump with the idea of continuous deposition of fresh film of metallic sorbent on the products of the reactions of the previous layer of metal saturated with the residual gases. The improvement consists of establishing a certain thickness standard for the newly deposited layers, namely of depositing monoatomic films of a gas sorbent (i), and of replacing titanium with the chemically more active lithium (ii).

(i). The requirement that a layer should be monoatomic introduces an exact quantitative measure into the sorption procedure and facilitates complete utilization (use) of the deposited metal. This is valid under the condition that the growth of a crystalline film of the product of the reaction of an active metal with the gases takes place under a slight excess of the gaseous reactands in the gas phase. The sorption rates in this case are somewhat lower than maximum, but the created compact films hold well on the substrate surface. Long contacts with the dry air or other dry gases (e.g. nitrogen) are not detrimental. Performing the sorption process in the regime close to the regime of epitaxial growth provides a solution to the problem of adjusting a gas sorbent to the working conditions of periodically opened vacuum chambers.

To realize this regime a well controlled vapor source with a known dependence of evaporation flow $j = j(T, \tau)$, where T is temperature, and $\tau$ is time (Fig. 4), is needed. Each new monolayer is deposited in an interval $\Delta t$ during which under certain conditions one monoatomic layer of metallic sorbent is completely saturated by residual gas molecules. The amount of gas, which one atomic layer is able to adsorb, is calculated taking into account stoichiometric coefficients in chemical equations for the reactions between metal and gases, and the value of $\Delta t$ is defined from the results of such calculations, based at this on the mass-spectrometer readings on real vapor pressures and the composition of the residual gas. For example, consider that a vacuum tube with the inside diameter of 8 cm contains a 1-mm diameter wire made of an alloy of Ag with 40 % Li stretched along the tube axis. The wire can be heated with electric current for deposition of Li onto the inside tube surface. If the equilibrium pressure inside such a tube is in the range of $10^{-12}$ mbar, then using the above mentioned parameters it is not difficult to make sure that a one atomic layer thick lithium film will be completely saturated by absorbed gas within one month (i.e. the Li film should be renewed every month), and also that a vapor generator of the described type can produce more than 4 thousand atomic layers of lithium.

(ii). The choice of lithium as a gas sorbent is determined not only by the lower evaporation temperature and higher chemical activity of lithium as compared to titanium, and not only by its ability to create highly ductile alloys with Au, Ag, Al, Cu, and Co, but is also due to the small size of the $Li^+$ cation, which causes useful properties of lithium like its high diffusibility in many materials, and its unique reactivity.

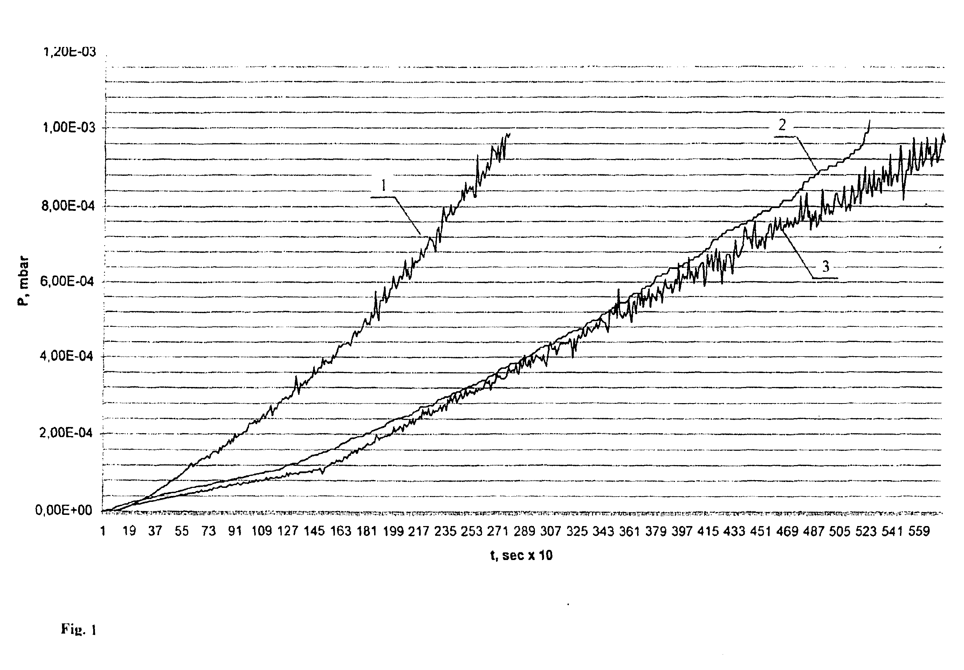

In fact, alongside with barium, lithium, unlike the rest of the alkali and alkaline earth metals, is not selective regarding the sorbed gases and reacts with all active gases, i.e. $O_2$ , $N_2$, $H_2$, CO, $CO_2$, and $H_2O$ (Fig. 1). Moreover, as shown by the thermodynamic analysis, lithium is able to react with methane forming compounds, which are stable at room temperatures.

Another advantage of lithium is an unlimited solubility of all of its compounds in water, which is directly connected with the life time of those vacuum chambers, in which a film gas sorbent is deposited directly on the vacuum chamber wall. In fact, NEG - coatings based on transition metals, which are used at present [C. Benvenuti et.al. Vacuum, 60 (2001) 57 - 67], are characterized by low sorption capacity, but having irreversibly changed the composition and structure of the construction material of an expensive vacuum chamber, can not be removed. On the contrary, Li - containing coatings can be easily washed from the substrate surface with a small amount of water not leaving any defects on the surface. The further drying of the substrate surface returns it to the initial state. And the given fact together with the fact that film products of the interaction between lithium and gases can stay unlimitedly long in dry gas atmosphere of any composition promises serious economic advantages.

**C.2.** Regime of non-evaporable getter

The described product can be used as non-evaporable getters. Alloys with high concentration of lithium in the form of strips are especially convenient for this purpose.

Lithium atoms in ionic compounds, in particular, lithium nitrides and oxides, as well as in other products of its reactions with residual gases, possess high mobility. Lithium diffusion coefficients in metallic substances thus exceed by many times the average values of metal diffusants. Therefore strips of lithium alloys prepared from solid solutions of lithium in Ag, Cu, Co, etc. can also play a role of non-evaporable getters. For this purpose, firstly, the strips have to be placed in suitable positions inside of a vacuum chamber, parallel to each other with a small gap between them, such that their array has a maximum permeability for gas molecules. Secondly, to accelerate lithium diffusion from inside the strips through the layer of the reaction products to the surface and, equally, to accelerate the counter flow of gas molecules through the products of reaction, it is necessary to maintain these strips heated to the temperatures lower than the boundary $T_{min}$ (Fig. 3), and preferably at 150 - 250°C. Thus, one and the same material depending on the heating temperature can be used either as an evaporable or as a non-evaporable getter. In the latter case it is acceptable to use alloys, lithium concentration in which goes beyond the limits of homogeneity region of solid solutions.

**VI. Description of the drawings**

Fig. 1. Comparison of sorption behavior of lithium and barium films.

A few measurements were performed in a vacuum chamber with thermally outgassing after the same condition after short venting to air. Before each measurement the vacuum chamber was pumped down to $10^{-8}$ mbar, then a valve to the pump was closed. Curve 1 presents the pressure increase as a function of time in the absence of a getter in the vacuum chamber while curves 2 and 3 do in the presence of a sorption film.

The curve 2 refers to air sorption at room temperature by a lithium film, which was obtained by deposition of 0.5mg Li from a LiGa crystal to the surface of ~ 150 $cm^2$. The curve 3 characterizes under the same conditions the work of a barium film of 5mg deposited on the same substrate from a compound $BaGa_2$.

It can be seen, that kinetic and capacity capabilities of the films are very similar if their thickness is small and the metals are taken in an isovalent ratio, when one barium atom corresponds to two lithium atoms. This also indicates the mainly ionic type of bonds in the reaction products of the given metals with gases,

Fig. 2.    Types of vapor generators:

       1 - a single ball on a resistive core, 2 - a garland of balls,
       3 -a wire generator, 4 - a strip generator.

Fig. 3. Phase diagram of the material and the temperature boundaries of its working regimes: $T_L$ - a liquidus line, $T_S$ - a solidus line, $T_{max}$ - the upper boundary for heating the material, T* - a boundary of deposition with the rate of $10^{-1}$ Å/s , , $T_{min}$ - a boundary of deposition with the rate of $10^{-1}$ Å/S , $T_{room}$ - room temperature.

Evaporation rate j is defined by the source temperature and by lithium concentration, and the film deposition rate is defined by the value of j, the symmetry of the evaporation flow and the distance from the source to the substrate. For a source of the initial composition $c_0$ the evaporation process can start at any temperature from the interval $T_{max}$ - $T_{min}$ and can be controlled according to any law depending on the target of the process.

Below an isothermal variant of the process is discussed, this process can be easier programmed and consists in periodical heating of the source to the deposition temperature, e.g. to $T_1$, exposure at this temperature during $\Delta\tau$ for obtaining a monoatomic layers and further in sorption performance of the film at switched off source for $\Delta t$, i.e. till the complete saturation of the Li film.

If the source is heated to the temperature $T_1$ then the initial deposition rate is close to $10^{-1}$ Å/s (Fig. 3, a point with coordinates $c_0$ and $T_1$). During the time $\Delta\tau$ lithium concentration in the source decreases by the value, which is equivalent to the mass of the lithium monolayer on the substrate. As the number of the working cycles "on/off" and the corresponding decrease of lithium content in the material a representative point, which describes the state if the material in the phase diagram, shifts along the isotherm $T = T_1$ from right to left till it reaches the boundary $T_{min}$ (the point $c_{1-2}$, $T_1$) where the deposition rate reaches lowers acceptable value of $10^{-3}$ Å/s. From that moment it is necessary to pass over to a higher isotherm, e.g. $T = T_2$. The process is then repeated at $T_2$ till passing over to the temperature $T = T_3$, etc. On the whole the path for the system is marked in Fig. 3 with arrows.

At temperatures between $T_{room}$ and $T_{min}$ lithium alloys show a strong pumping down effect. The thermal energy of atoms in this temperature range is not sufficient for evaporation of lithium but sufficient for supporting a diffusion flow of lithium atoms from the volume of the material to its surface, where they react with gases and bind them. This kind of applications allows usage of alloys with concentration $c_{Li}$, which exceeds the limit of solubility of lithium in solid Me.

Fig. 4. Evaporation flow j as a function of time $\tau$. Lithium concentration in a source decreases with time and together with this evaporation rate j also decreases. So the duration of deposition of a monoatomic layer $\Delta\tau$ gradually increases: if this value at some moment of time $\tau_h$ was $\Delta\tau_h$, then at some later moment $\tau_i$ it becomes $\Delta\tau_i$, at this ч' ТО $\Delta\tau_i > \tau_h$. This increase of $\Delta\tau$ has its limit after reaching of which it is necessary to pass over to the deposition at a higher temperature.

Fig. 5. Evolution of the radial distribution of concentration $c_{Li}$ of the heated in vacuum wire of radius R:

$c_0$ - concentration at $\tau = 0$, $c_1$ - concentration at $\tau = \tau_1$, $C_2$ - at $\tau = \tau_2$, $c_3$ - at $\tau = \tau_3$, at this $0 < \tau_1 < \tau_2 << \tau_3$.

If at a certain moment $\tau_k$ the distribution $c_{Li}$ is characterized by a curve $c_k$. Then during the period of a natural cooling down of the wire from the heated state to the room temperature the concentration profile due to the small ratio $t_T/t_D$ will change also very little and will be described by the curve $c_{k+1}$, which is close to $c_k$.

The given fact together with the fast loss of lithium by a thin surface layer at the initial stage of the thermovacuum treatment constitutes the physical essence of the method of creation of the protective coating.

**Claims**

1. Metallic gas sorbents on the basis of lithium alloys in the form of balls, wires and strips made of A - Me alloys as solid solutions, in which A is Li containing Na in the range of 0 to 5 at % and Me is a non-active and non-volatile component or a combination of metals selected from the group of Ag, Al, Au, Co, Cu.

2. Metallic gas sorbents according to claim 1, suitable as vapor generators A, wherein the A - Me alloys have the composition of Ag-Li as solid solutions with a Li concentration of not more than 50 at %, Al-Li with a Li concentration of not more than 2 at %, Au-Li with a Li concentration of not more than 40 at %, Co-Li with a Li concentration of not more than 28 at %, or Cu-Li with a Li concentration of not more than 22 at %.

3. Metallic gas sorbents according to claims 1 or 2, wherein the balls, wires or strips made of A - Me alloys comprise a cover layer of at least one component of Me.

4. Metallic gas sorbents according to claim 1 or claim 3, suitable as non-evaporable gas sorbents, wherein the concentration of Li is higher than its limit solubility in the Me matrix.

5. Use of the vapor generators according to one or more of the preceding claims 1 to 4, in film technologies, preferably as vapor sources in manufacturing of film gas sorbents or in producing films converting light signals into electric signals or - vise versa - electric signals into light signals.

6. A sorption process allowing either the activation by deposition of a lithium film (a) or the activation by diffusion stimulation of reactions with gases on the surface of the gas sorbent (b) according to one of the claims 1 to 4.

7. A sorption process wherein, in order to use the gas sorbent according to one of the claims 1 to 4 most efficiently and to optimize the conditions for chemical bonding of residual gases in high vacuum and ultra high vacuum chambers, lithium or a mixture of lithium with sodium are used as the evaporable metal (A) which is deposited in the form of monoatomic layer with an average rate somewhat lower than the rate of gas sorption under the given conditions.

8. A sorption process according to claim 6, for which an evaporable gas sorbent is produced in the form of balls, wires and strips, which consist of an Ag-Li alloy with a Li concentration of not more than 50 at %, an A1-Li alloy with a Li concentration of not more than 2 at %, an Au-Li alloy with a Li concentration of not more than 40 at %, a Co-Li alloy with a Li concentration of not more than 28 at %, or a Cu-Li alloy with a Li concentration of not more than 22 at %.

9. Sorption process according to claims 6 to 8, wherein the evaporable gas sorbent is manufactured in a form of ball, wire or strip vapor generators.

10. The sorption process according to claims 6 and 7, wherein for obtaining uniformity in the thickness of films the type of a generator is selected with consideration of the substrate shape and the generator itself is placed in the position of a symmetry element of the substrate.

**11.** The sorption process according to claims 6, 9, and 10, wherein for obtaining of uniformity in the thickness of films the same temperature is maintained on the entire surface during the deposition time.

**12.** The sorption process according to claims 6 to 11, wherein one sorption cycle consists of time $\Delta\tau$ for deposition of one monoatomic lithium layer and time $\Delta t$ during which this monoatomic layer completely turns into products of reaction between lithium and residual gases at room temperature.

**13.** The sorption process according to claims 6 to 12, wherein in case of maintenance works a vacuum chamber can for a long time be filled or blown with any dry active or inert gas or their mixture without a risk of peeling off or loose particle formation of the film deposit during the exposure in gas media as well as during its further evacuation.

**14.** The sorption process according to claims 6 to 13, wherein in the case it is necessary to remove the film deposit completely, the substrate surface is washed with clean water and dried by any suitable method with the recovery of the working properties of the substrate.

**15.** The sorption process according to claim 6, wherein a non-evaporable substrate is manufactured in the form of balls, wires, and strips.

**16.** The sorption process according to claims 6 and 15, when balls, wires, or strips are placed in a suitable place in a vacuum chamber, heated to the temperature lower than the minimum deposition temperature, preferably to 150 - 250°C, and are maintained in this heated state for chemical bonding of the residual gases in a form of a growing layer of reaction products on the boundary vacuum / solid gas sorbent.

**17.** A method of producing of metallic gas sorbents, according to claims 1 to 4, suitable as evaporable and non-evaporable gas sorbents, **characterized in that** their manufacturing comprises the following stages:

- preparation of the gas sorbent material;
- shaping the material into balls, wires or strips;
- creating a protective cover layer on the surface of evaporable gas sorbents.

**18.** The method according to claim 17, **characterized in that** the initial alloys A - Me are prepared in suitable metallic crucibles under a negative pressure of high purity argon.

**19.** A method according to claim 16, **characterized in that** the alloys A - Me are shaped into a necessary end shape by treating the obtained ingot mechanically with a standard press, rolling and /or drawing equipment.

**20.** A method according to claims 16 - 18, **characterized in that** for formation of the a Me - coating on the surface of the balls, wires, or strips obtained with mechanical methods they are subjected to special thermovacuum treatment consisting in heating of the gas sorbent to the preset temperature in vacuum, exposure at this temperature for a certain time and the following rapid cooling.

Fig. 1

EP 1 791 151 A1

Fig. 2.

Fig. 3

Fig. 4

Fig. 5

**EP 1 791 151 A1**

European Patent Office

**EUROPEAN SEARCH REPORT**

Application Number

EP 05 02 5992

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 1 600 232 A (NANOSHELL MATERIALS RESEARCH & DEVELOPMENT GMBH) 30 November 2005 (2005-11-30) * paragraphs [0001] - [0003], [0005], [0016], [0017], [0020], [0033], [0058] * * column 6, line 30 - line 31 * * claims 1-7,10,11 * ----- | 1,17 | H01J7/18 B01J20/02 B01J20/04 C22C24/00 |
| Y | US 4 512 960 A (SZWARC ET AL) 23 April 1985 (1985-04-23) * column 1, line 11 - line 27 * * column 2, line 14 - line 47 * * column 3, line 25 - column 4, line 11 * * column 5, line 7 - column 6, line 12; claims 1,7 * ----- | 1,5,17 | |
| Y | US 5 544 490 A (MANINI ET AL) 13 August 1996 (1996-08-13) * column 3, line 4 - column 4, line 63 * * column 5, line 18 - line 30 * * claim 1 * ----- | 1 | |
| | | | TECHNICAL FIELDS SEARCHED (IPC) |
| Y | WO 2005/112067 A (NANOSHELL MATERIALS RESEARCH & DEVELOPMENT GMBH; CHUNTONOV, KONSTANTIN) 24 November 2005 (2005-11-24) * entire document * ----- | 5,17 | C23C H01J B01J C22C |
| A | EP 0 509 971 A (SAES GETTERS S.P.A) 21 October 1992 (1992-10-21) * column 1, line 1 - column 10, line 49; claims 1-14 * ----- | 1-20 | |
| E | EP 1 612 784 A (KABUSHIKI KAISHA KOBE SEIKO SHO) 4 January 2006 (2006-01-04) * paragraphs [0001], [0005], [0007] - [0010], [0038]; claims 1-12 * * tables 1-7 * ----- | 1-20 | |

The present search report has been drawn up for all claims

| Place of search | Date of completion of the search | Examiner |
|---|---|---|
| Munich | 31 March 2006 | Gavriliu, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 02 5992

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2006

| Patent document cited in search report | | Publication date | Patent family member(s) | | Publication date |
|---|---|---|---|---|---|
| EP 1600232 | A | 30-11-2005 | NONE | | |
| US 4512960 | A | 23-04-1985 | NONE | | |
| US 5544490 | A | 13-08-1996 | CN | 1151790 A | 11-06-1997 |
| | | | DE | 69504984 D1 | 29-10-1998 |
| | | | DE | 69504984 T2 | 12-05-1999 |
| | | | EP | 0769117 A1 | 23-04-1997 |
| | | | WO | 9601966 A1 | 25-01-1996 |
| | | | IT | 1271207 B | 27-05-1997 |
| | | | JP | 9512088 T | 02-12-1997 |
| | | | JP | 3105542 B2 | 06-11-2000 |
| WO 2005112067 | A | 24-11-2005 | WO | 2005119725 A1 | 15-12-2005 |
| EP 0509971 | A | 21-10-1992 | DE | 69205050 D1 | 02-11-1995 |
| | | | DE | 69205050 T2 | 07-03-1996 |
| | | | IT | 1246786 B | 26-11-1994 |
| | | | JP | 2627703 B2 | 09-07-1997 |
| | | | JP | 5131134 A | 28-05-1993 |
| EP 1612784 | A | 04-01-2006 | CN | 1725334 A | 25-01-2006 |
| | | | US | 2005287333 A1 | 29-12-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5306406 A, V. Palmieri
- US 20040253476 A, A. Conte
- US 4007899 A, W. A. van Gils.
- US 6851997 B, C. Caretti

**Non-patent literature cited in the description**

- **J. C. TUMBULL.** *J. Vac. Sci. Technol.,* 1977, vol. 14 (1), 636-639
- **B. FERRARIO.** *Vacuum,* 1996, vol. 47 (4), 363-370
- **W. ESPE et al.** *Getter materials, Electronics,* October 1950
- **M. PIRANI.** Principles of vacuum engineering. Reinhold Publishing Co, 1961, vol. 6, 251-291
- **L. CATANEO et al.** AlkaMax Application Note. SAES Getters S.p.A, May 2004, vol. 1
- **K. A. CHUNTONOV et al.** *Vacuum,* 1996, vol. 47 (5), 463-466
- Formation techniques. **A. BROWN.** Intermetallic compounds. John Wiley, 1967, 303-336
- Crystal growth. Theory and techniques. Plenum Press, 1974, vol. 1
- **K. A. CHUNTONOV.** *J. Less - Comm. Met.,* 1982, vol. 83, 143-153
- Synthesis and processing techniques. **P. L. MARTIN.** Intermetallic compounds. Principles and practice. John Wiley, 1994, vol. 1, 637-657
- **C. BENVENUTI.** *Vacuum,* 2001, vol. 60, 57-67